(19) Europäisches Patentamt
European Patent Office
Office européen des brevets

(11) **EP 2 072 555 A1**

(12) **EUROPEAN PATENT APPLICATION**

(43) Date of publication:
    **24.06.2009 Bulletin 2009/26**

(51) Int Cl.:
    *C08G 18/63* $^{(2006.01)}$   *B01D 37/04* $^{(2006.01)}$
    *B01D 61/14* $^{(2006.01)}$

(21) Application number: **08021340.8**

(22) Date of filing: **09.12.2008**

(84) Designated Contracting States:
    **AT BE BG CH CY CZ DE DK EE ES FI FR GB GR
    HR HU IE IS IT LI LT LU LV MC MT NL NO PL PT
    RO SE SI SK TR**
    Designated Extension States:
    **AL BA MK RS**

(30) Priority: **20.12.2007 US 4801**

(71) Applicant: **Bayer MaterialScience AG
    51368 Leverkusen (DE)**

(72) Inventors:
    • **Guelcher, Scott, A.
      Franklin
      TN 37064 (US)**
    • **England, Jiong
      Dunbar
      WV 25064 (US)**
    • **Adkins, Rick, L.
      New Martinsville
      WV 26155 (US)**

(54) **Polymer polyols with improved properties and a process for their production**

(57) This invention relates to polymer polyols having a solids content of greater than or equal to 10 to 60% by weight, a mean average particle size of at least 0.6 $\mu$, and which contain a specified concentration of blinding particles. This invention also relates to a process for preparing these polymer polyols.

EP 2 072 555 A1

**Description**

BACKGROUND OF THE INVENTION

The present invention relates to polymer with improved properties which are used to produce polyurethane foams. These improved polymer polyols are characterized by a solids content of from about 10% to about 60% by weight, having a mean average particle size of at least 0.60 μ, and contains a specific concentration of blinding particles. This invention also relates to a process for the production of these improved polymer polyols.

As described in the art, the term "depth filter" denotes a filter having pores that can remove from a fluid particles that may be smaller than the size of the pores in the filter. The particles are removed by interception as they traverse a tortuous path through the pores. Because of the relatively low filtration area and high thickness, depth filters typically have a high dirt holding capacity but also a high pressure drop across the filter. To solve this problem the filtration medium can be pleated, which increases the filtration area and reduces the thickness while maintaining the same volume of filtration media. Pleating the filtration media can reduce the pressure drop and provide a high dirt holding capacity. In this specification, the term "pleated depth filter" means a continuous pleated sheet of depth filter medium supported on the inside by an inner support core and on the outside by an outer support case.

U.S. Patent 5,279,731 discloses a generally cylindrical pleated depth filter comprising at least one continuous sleeve of depth filter medium which is pleated along the length of the filter medium, an inner support core contacting the inward ends of the pleats, and an outer support cage contacting the outer plates. This filter was found to be useful for separating a test dust from water at a significantly lower pressure drop than a non-pleated depth filter.

Filled polyols, also known as polymer polyols, are viscous fluids that consist of fine particles dispersed in polyols. Examples of solids used include styreneacrylonitrile co-polymers and polyureas. Polymer polyols are typically produced by *in situ* polymerization of at least one monomer in a base polyol, which yields a polydisperse particle size distribution that is characterized by significant populations of particles which are both considerably smaller and larger than the mean particle size. Oversize particles in the range from approximately 20 to 500 microns are particularly undesirable because they can block small orifices in foam machinery during the manufacture of polyurethane foams from polymer polyols. In particular, continuous processing with sieve-based filtration foam technology is not possible due to the deposition of coarse particles from the polymer polyol which blinds the pores in the filtration sieves.

A mechanical grinding process is described in JP-A-06199929. This process reduces particles in the size range of 100 to 700 mesh to sizes less than 4 microns. It is, however, difficult to ensure complete grinding of the particles, particularly deformable particles such as SAN polymer polyols.

WO-93/24211 describes a cross-flow filtration process to remove solid impurities which range in size from 1 to 200 microns from polymer dispersions using ceramic filter materials with pore sizes of 0.5 to 10 microns. A disadvantage of this process is that it yields a considerable amount of retentate rich in large particles.

U.S. Published Patent Application 2002/0077452 A1 discloses a sieve filtration process using dynamic pressure disc filters to separate the blinding particles from the polymer polyol. In the Example 1, the sieve filtration process reduced the concentration of blinding particles by a factor 100 or more to less than 1 ppm. In a preferred embodiment, sintered, multi-layer metal fabrics having square or rectangular meshes are used as filter materials. Due to the narrow pore size distribution and the absence of depth filtration characteristics in these filter media, they are described as being less susceptible to blinding and as facilitating a sharp separation between the blinding particles and the majority of the particles in the dispersion. One disadvantage of this sieve filtration process is the high capital cost of the equipment.

The difficulty of filtering filled polyols is that a sharp separation between the blinding particles and the majority of the particles in the dispersion is required. If the filter pore size is too large, the removal efficiency of blinding particles will be too low. If the filter pore size is too small, a large number of smaller particles will also be trapped, resulting in short filter life and significant volumes of waste. Another difficulty is that polymer polyols are typically highly viscous fluids. Thus, conventional bag and cartridge filters become rapidly blocked and are not typically useful for polymer polyols. See U.S. Published Patent Application 2002/0077452 A1.

U.S. Patent 6,797,185 discloses a filtration method for polymer polyols which permits rapid filtration of large volumes of polymer polyols in an economical manner. The resultant polymer polyol mainly has particles of 25 microns or smaller and is storage stable under a variety of conditions. In one embodiment, the method for index filtration comprises providing a system having a first and second reservoirs, securing a first portion of a depth filtration filter media between the first and second reservoirs and forming a liquid tight seal between the first reservoir and the filter media, introducing a polymer polyol into the first reservoir, receiving the polymer polyol in the second reservoir after it passes through the filter media and moving the first portion of depth filtration media from between the first and second reservoirs and positions a second clear portion of depth filtration media between the reservoirs. The second embodiment is similar to the first except it requires that the depth filtration media have a mean flow pore size of from 15 to 75 microns.

There exists a need for low-capital filtration technology for polymer polyols. It has surprisingly been found that pleated depth filters are useful for separating blinding particles from polymer polyols with high separation efficiency and acceptable filter life. Another advantage is the replacement of complicated filter systems containing moving parts with an effective static filtration system.

SUMMARY OF THE INVENTION

This invention relates to polymer polyols that are characterized by a solids content of from about 10 to about 60% by weight, a mean average particle size of at least 0.60 $\mu$ and contains a low concentration of blinding particles. More specifically, the polymer polyols of the invention contain a concentration of blinding particles $c_b$ in which

$$c_b \leq 10^6 \cdot \frac{\pi \rho_s N_{p0} d_p^3}{c_s m_0} \left[ 1 - \frac{\mu R_{m0}}{\rho A \Delta p} \left( \frac{dm}{dt} \right)_{final} \right]$$

wherein:

$c_b$      represents the concentration of blinding particles, measured in ppm;
$N_{p0}$      represents the number of pores in a clean test filter;
$d_p$      represents the pore diameter of a clean test filter, measured in m;
$R_{m0}$      represents the resistance of a clean test filter, measured in 1/m;
A      represents the cross-sectional area of a test filter, measured in $m^2$;
$\rho$      represents the density of the polymer polyol, measured in $kg/m^3$;
$\mu$      represents the dynamic viscosity of the polymer polyol, measured in Pa·s;
$\rho_s$      represents the density of the solids in the polymer polyol, measured in $kg/m^3$;
$c_s$      represents the concentration of total solids in the polymer polyol, measured in wt. %;
$\Delta p$      represents the constant pressure drop applied across the test filter, measured in Pa;
$m_0$      represents the total mass of filtrate collected, measured in kg;

and

$$\left( \frac{dm}{dt} \right)_{final}$$

represents the slope of the mass versus time curve at the end of the pressure filtration test, measured m kg/s.

These polymer polyols comprise the free-radical polymerization product of (a) at least one base polyol, (b) at least one preformed stabilizer and (c) at least one ethylenically unsaturated monomer, in the presence of (d) at least one free-radical polymerization initiator, and optionally, (e) a polymer control agent or a chain transfer agent.

The present invention also relates to a continuous process for the preparation of these polymer polyols which contain a solids content, a mean average particle size and a concentration of blinding particles $c_b$ as defined above. This process comprises continuously filtering the polymer polyol through a suitable filter (preferably a pleated depth filter) and collecting the filtrate.

DETAILED DESCRIPTION OF THE INVENTION

As used herein, the term "particle size ratio" means the ratio of the absolute filtration rating of the pleated depth filter to the mean particle size.

As used herein, the term "blinding particles" means the population of particles which block the small orifices present in polyurethane foam machinery.

As used herein, the term "test filter ratio" means the ratio of the absolute filtration rating of the pleated depth filter to the pore size of the test filter.

As used herein, the term "inlet concentration" refers to the concentration of blinding particles in the feed to the pleated depth filter.

As used herein, the term "outlet concentration" means the concentration of blinding particles in the filtrate collected from the pleated depth filter.

As used herein, the term "the end of the pressure filtration test" refers to the depletion of polymer polyol through the test filter or the point at which the slope of the filtrate mass versus the time curve is equal to 60% of its initial value, whichever occurs first.

The inlet and outlet concentration are measured as described below in the section labeled "Analysis and Measurement".

It is an object of the present invention to prepare polymer polyols which are suitable for use as the isocyanate-reactive component in foam machinery which used sieve-type prefilters prior to the foam injector/nozzle. Polymer polyols are typically not suitable for this process and/or machinery due to the high concentration of blinding particles present.

In accordance with the present invention, the polymer polyols typically have a solids content of greater than or equal to 10% by weight up to and including about 60% by weight. Typically, the polymer polyols of the invention will have a solids content of greater than or equal to 10% by weight, preferably greater than or equal to 15% by weight, more preferably greater than or equal to 25% by weight, most preferably greater than or equal to 30% by weight and most particularly preferably greater than or equal to 40% by weight, based on the total weight of the polymer polyol. Typically, the polymer polyols will also have a solids content of less than or equal to 60% by weight, preferably less than or equal to 58% by weight, more preferably less than or equal to 55% by weight and most preferably no more than about 50% by weight, based on the total weight of the polymer polyol. These polymer polyols may have a solids content ranging between any combination of these upper and lower values, inclusive, e.g. from greater than or equal to 10% to less than or equal to 60% by weight, preferably from greater than or equal to 15% to less than or equal to 58% by weight, more preferably from greater than or equal to 25% to less than or equal to 55% by weight, most preferably from greater than or equal to 30% to less than or equal to 50% by weight and most particularly preferably greater than or equal to 40% to less than or equal to 50% by weight, based on the total weight of the polymer polyol.

In accordance with the present invention, the polymer polyols typically comprise the free-radical polymerization of at least one ethylenically unsaturated monomer with a base polyol and a preformed stabilizer, in the presence of a free-radical polymerization catalyst and optionally, a polymer control agent or a chain transfer agent. A suitable description of PMPOs prepared from preformed stabilizers and a process for their preparation is disclosed in U.S. Patent 5,196,476, the disclosure of which is hereby incorporated by reference. It is preferred that a mixture of two ethylenically unsaturated monomers is used, and that these comprise styrene and acrylonitrile in a weight ratio of from 80:20 to 35:65, preferably from 70:30 to 50:50.

Suitable polymer polyols for the present invention may be prepared by utilizing the processes as disclosed in, for example, U.S. Patents 3,875,258, 3,931,092, 3,950,317, 3,953,393, 4,014,846, 4,093,573, 4,148,840, 4,242,249, 4,372,005, 4,334,049, 4,454,255, 4,458,038, 4,689,354, 4,690,956, 4,745,153, Re 29,014, 4,305,861, 4,954,561, 4,997,857, 5,093,412, 5,196,476, 5,254,667, 5,268,418, 5,494,957, 5,554,662, 5,594,066, 5,814,699, 5,854,358, 5,854,386, 5,990,185, 5,990,232, 6,013,731, 6,172,164, 6,455,603, 7,160,975, 7,179,882 and Re 33,291, as well as in U.S. Patents 4,524,157, 4,539,340, Re 28,715 and Re 29,118, all of the disclosures of which are hereby incorporated by reference.

As set forth above, the polymer polyols of the present invention contain a concentration of blinding particles $c_b$ in which:

$$c_b \leq 10^6 \cdot \frac{\pi \rho_s N_{p0} d_p^3}{c_s m_0}\left[1 - \frac{\mu R_{m0}}{\rho A \Delta p}\left(\frac{dm}{dt}\right)_{final}\right]$$

wherein the variables are defined as set forth above.

In accordance with the present invention, it is preferred that the concentration of blinding particles present in the polymer polyols is less than about 0.55 ppm, preferably less than about 0.4 ppm, more preferably less than about 0.3 ppm and most preferably less than about 0.2 ppm.

The polymer polyols of the invention typically are characterized by a mean average particle size of at least about 0.6 $\mu$ up to and including about 3.5 $\mu$. Typically polymer polyols of the invention will have a mean average particle size of at least about 0.6 $\mu$, preferably at least about 0.65 $\mu$, more preferably at least about 0.7 $\mu$ and most preferably at least about 0.75 $\mu$. Typically, the polymer polyols will also have a mean average particle size of less than or equal to 3.5 $\mu$, preferably less than or equal to 2.5 $\mu$, more preferably less than or equal to 2.0 $\mu$, and most preferably less than or equal to 1.5 $\mu$. These polymer polyols may have a mean average particle size ranging between any combination of these upper and lower values, inclusive, e.g. from greater than or equal to 0.60 $\mu$ to less than or equal to 3.5 $\mu$, preferably from greater than or equal to 0.65 $\mu$ to less than or equal to 2.5 $\mu$, more preferably from greater than or equal to 0.70

μ to less than or equal to 2.0 μ, and most preferably from greater than or equal 0.75 μ to less than or equal to 1.5 μ.

In the process of preparing the polymer polyols, pleated depth filters are typically used as the filtration media. Pleated depth filters provide high dirt holding capacity which results in long filter life, and a high separation efficiency of the blinding particles.

In the process for the continuous filtration of polymer polyols herein in which the concentration of blinding particles is as described above, the following conditions are preferred:

a) the initial pressure drop across the pleated depth filter is less than about 1.0 bar (more preferably less than about 0.8 bar, and most preferably less than about 0.5 bar),
b) the final pressure drop across the pleated depth filter at the end of the cycle is less than about 4 bar (more preferably less than about 3 bar, and most preferably less than about 2 bar),
c) the ratio of the absolute pore size of the pleated depth filter to the mean particle size of the dispersion is greater than about 30:1 (more preferably greater than about 45:1, and most preferably greater than about 60:1), and
d) the ratio of the of the absolute pore size of the pleated depth filter to the pore size of the test filter is between about 0.4:1 and about 4:1 (more preferably between about 0.5:1 and 2:1, and most preferably between about 0.6:1 and 1.5:1).

The polymer polyols produced by this process may have a solids content of from greater than or equal to about 10% by weight to less than or equal to about 60% by weight. Typically, the polymer polyols produced by the process will also have a solids content of greater than or equal to 10% by weight, preferably greater than or equal to 15% by weight, more preferably greater than or equal to 25% by weight, most preferably greater than or equal to 30% by weight and most particularly preferably greater than or equal to 40% by weight, based on the total weight of the polymer polyol. Typically, the polymer polyols will also have a solids content of less than or equal to 60% by weight, preferably less than or equal to 58% by weight, more preferably less than or equal to 55% by weight and most preferably no more than about 50% by weight, based on the total weight of the polymer polyol. These polymer polyols may have a solids content ranging between any combination of these upper and lower values, inclusive, e.g. from greater than or equal to 10% to less than or equal to 60% by weight, preferably from greater than or equal to 15% to less than or equal to 58% by weight, more preferably from greater than or equal to 25% to less than or equal to 55% by weight, most preferably from greater than or equal to 30% to less than or equal to 50% by weight and most particularly preferably greater than or equal to 40% to less than or equal to 50% by weight, based on the total weight of the polymer polyol.

The process of preparing the polymer polyols herein is a continuous process.

In accordance with the present invention, the process is performed at an initial pressure drop across the filter ranging from 0.01 to 1.0 bar, preferably from 0.05 to 0.8 bar, and most preferably from 0.07 to 0.5 bar. The throughput and the rate of filter blinding increase with increasing initial pressure drop across the filter. Therefore, at low initial pressure drops, the filter has a long life, but the throughput is too low to be practical for a commercial process. At high initial pressure drops, the throughput is high but the filter life is too short to be commercially viable. Moderate initial pressure drops are preferred for acceptable throughput and filter life. The process can be performed at elevated temperatures to reduce the filled polyol viscosity, thereby increasing throughput. Suitable elevated temperatures for this process are temperatures below the softening point of the filter material as recommended by the manufacturer.

Also in accordance with the present invention, the process is performed at a final pressure drop across the depth filter ranging from 0.4 to 5 bar, preferably from 0.7 to 4 bar, and most preferably from 1 to 3 bar. As blinding particles deposit in the filter, the pores become blocked, resulting in increased depth filter resistance and increased pressure drop over the duration of the filtration cycle. At the end of the cycle the filter must be replaced. Pleated depth filters are typically rated for a maximum pressure drop at a given temperature. Operation at pressure drops greater than the rated value can result in loss of filter integrity and breakthrough of particles from the filter, thereby causing a loss of separation efficiency. Therefore, operation at high final pressure drops can result in longer filter life but decreased separation efficiency, while operation at low final pressure drops can ensure adequate separation efficiency but short filter life. Moderate final pressure drops are preferred for acceptable separation efficiency and filter life.

As used herein, a "high" final pressure drop is the maximum differential pressure (MDP) allowed by the manufacturer. The maximum differential pressure for a given filter operated at specific temperatures is specified by the manufacturer.

As used herein, a "low" final pressure drop means that no blinding of the filter medium occurred.

In accordance with the present invention, acceptable separation efficiency means that greater than or equal to 90% of the blinding particles can be captured by the filter medium.

The ratio of the absolute filtration rating of the pleated depth filter to the mean particle size, referred to as the "particle size ratio" in this specification, has an important effect on the performance of the pleated depth filter. The pleated depth filter is intended to remove the large blinding particles while allowing the finer particles closer to the mean size to pass through. However, the separation is not perfectly sharp, and some smaller particles will also be trapped by the filter. As the particle size ratio decreases, the retention of small particles increases, which results in faster filter loading and reduced filter life. In accordance with the present invention, the process is performed at a particle size ratio greater than 30:1, preferably greater than 45:1, and more preferably greater than 60:1.

A pressure filtration test is required to evaluate the performance of the pleated depth filter. In the pressure filtration test, polymer polyol is forced through a test filter under constant pressure and the mass of filtrate collected versus time is measured to determine the concentration of blinding particles. To properly simulate the performance of the polymer polyol in foam processing equipment, the pore size of the test filter should match the size of the device that the polymer polyol blinds during foam performance. As an example, in foam machinery using sieve pack technology, the polymer polyol is passed through a series of sieves during processing. To simulate blocking in the sieve pack, the sieve with the smallest size pores should be chosen as the "test filter". The ratio of the absolute filtration rating of the pleated depth filter to the pore size of the test filter, referred to as the "test filter ratio" in this specification, has an important effect on the performance of the pleated depth filter. In accordance with the present invention, the process is performed at a test filter ratio ranging from 0.4:1 to 4:1, preferably from 0.5:1 to 2:1, and more preferably from 0.6:1 to 1.5:1. At low test filter ratios the separation efficiency of blinding particles is high, but filter life can be reduced because particles smaller than those targeted for removal can also be removed. At high test filter ratios the separation efficiency of blinding particles decreases. Therefore, moderate test filter ratios are preferred for high separation efficiency of blinding particles and acceptable filter life.

Also in accordance with the present invention, the process is performed under the preferred conditions to yield a polymer polyol composition containing less than 0.55 ppm blinding particles, preferably less than 0.4 ppm, and more preferably less than 0.3 ppm and most preferably less than 0.2 ppm. The lower the concentration of blinding particles in the filtrate the longer the filled polyol can be processed in continuous foam machinery without blocking the small orifices.

Suitable pleated depth filters for the polymer polyols of the present invention include all pleated depth filters. Examples of such filters include, but are not limited to, filters which are commercially available from Pall Corporation, USF Filtration & Separations, etc.

The polymer polyols of the present invention are preferably compatible with continuous foam machinery such as, but not limited to, NovaFlex foam machinery. Thus, the concentration of blinding particles present in these polymer polyols is preferably low enough that the blinding particles do not significantly interfere with, block or clog the orifices when processed in continuous foam machinery.

Analysis and Measurement:

To evaluate the performance of a pleated depth filter, the concentration of blinding solids in the filtrate must be measured. The concentration of blinding solids was calculated from a pressure filtration test described as follows. A known mass of polymer polyol was charged to a pressure vessel and a constant pressure was applied to the vessel. At the start of the experiment, the valve at the bottom of the pressure vessel was opened, forcing the polymer polyol through the test filter into a collection vessel sitting on a balance. The mass of filtrate was measured versus time. Due to deposition of blinding particles in the pores of the test filter, the flow rate of filtrate, which is calculated from the slope of the mass versus time curve, decreases over time. The pressure filtration test was stopped at the depletion of polymer polyol through the test filter or at the point at which the slope of the filtrate mass versus the time curve is equal to 60% of its initial value, whichever occurs first. From the slope of the filtrate mass versus time curve and the test filter parameters the concentration of blinding particles was calculated from the following equation:

$$c_b = 10^6 \cdot \frac{\pi \rho_s N_{p0} d_p^3}{c_s m_0} \left[ 1 - \frac{\mu R_{m0}}{\rho A \Delta p} \left( \frac{dm}{dt} \right)_{final} \right]$$

The terms in the above equation are defined as follows:

$c_b$      represents the concentration of blinding particles, measured in ppm;
$N_{p0}$      represents the number of pores in a clean test filter;
$d_p$      represents the pore diameter of a clean test filter, measured in m;
$R_{m0}$      represents the resistance of a clean test filter, measured in 1/m;
$A$      represents the cross-sectional area of a test filter, measured in $m^2$;
$\rho$      represents the density of the polymer polyol, measured in $kg/m^3$;
$\mu$      represents the dynamic viscosity of the polymer polyol, measured in Pa·s;
$\rho_s$      represents the density of the solids in the polymer polyol, measured in $kg/m^3$;

$c_s$  represents the concentration of total solids in the polymer polyol, measured in wt. %;

$\Delta p$  represents the constant pressure drop applied across the test filter, measured in Pa;

$m_0$  represents the total mass of filtrate collected, measured in kg;

and

$$\left(\frac{dm}{dt}\right)_{final}$$

represents the slope of the mass versus time curve at the end of the pressure filtration test, measured in kg/s.

The following examples further illustrate details for the preparation and use of the compositions of this invention. The invention, which is set forth in the foregoing disclosure, is not to be limited either in spirit or scope by these examples. Those skilled in the art will readily understand that known variations of the conditions and processes of the following preparative procedures can be used to prepare these compositions. Unless otherwise noted, all temperatures are degrees Celsius and all parts and percentages are parts by weight and percentages by weight, respectively.

EXAMPLES:

The following materials were used in the examples:

| | |
|---|---|
| Polymer Polyol A: | A dispersion of styrene/acrylonitrile (67% by wt.:33% by wt.) co-polymer in polyether polyol prepared by reacting a mixture of styrene and acrylonitrile monomers and preformed stabilizer in a base polyol. The base polyether polyol has a hydroxyl functionality of 3, a hydroxyl number of 52, and an ethylene oxide content of 15% by wt. The polymer polyol has a hydroxyl number of 27.7, a viscosity of 2924 cSt, a mean particle size of 1.18 microns, a solids content of 44.98 wt-%, and blinding particles concentration of 3.5 ppm |
| Polymer Polyol B : | A dispersion of styrene/acrylonitrile (67% by wt.: 33% by wt.) co-polymer in polyether polyol prepared by reacting a mixture of styrene and acrylonitrile monomers and preformed stabilizer in a base polyol. The base polyether polyol has a hydroxyl functionality of 3, a hydroxyl number of 52, and an ethylene oxide content of 15% by wt. The polymer polyol has a hydroxyl number of 29.1, a viscosity of 3027 cSt, a mean particle size of 1.02 microns, a solids content of 44.34 wt-%, and blinding particles concentration of 1.8 ppm. |
| Pleated Depth Filter A : | A 100-micron absolute-rated all-polypropylene depth filter with a crescent-shaped pleat geometry. The filter has a nominal diameter of 2.6 inches and a length of 10 inches. The filter is rated for a maximum pressure differential (MPD) of 35 psig at 65°C. This filter is commercially available under the product name PFT100-1UN from USF Filtration & Separations. |
| Pleated Depth Filter B: | A 70-micron absolute-rated all-polypropylene depth filter with a crescent-shaped pleat geometry. The filter has a diameter of 2.5 inches, a length of 10 inches, and a nominal filter area of 2.5 square feet. The filter is rated for a maximum pressure differential (MPD) of 60 psig at 30°C. This filter is commercially available under the product name PFY1UY700J from Pall Corporation. |
| Pleated Depth Filter C: | A 100-micron absolute-rated all-polypropylene depth filter with a crescent-shaped pleat geometry. The filter has a diameter of 2.5 inches, a length of 10 inches, and a nominal filter area of 2.5 square feet. The filter is rated for a maximum pressure differential (MPD) of 60 psig at 30°C. This filter is commercially available under the product name PFY1UY1000J from Pall Corporation. |
| Pleated Depth Filter D: | A 40-micron absolute-rated all-polypropylene depth filter with a crescent-shaped pleat geometry. The filter has a diameter of 2.5 inches, a length of 10 inches, and a nominal filter area of 2.5 square feet. The filter is rated for a maximum pressure differential (MPD) of 60 psig at 30°C. This filter is commercially available under the product name PFY1UY400J from Pall Corporation. |

(continued)

| Test Filter A: | An 85-micron filter sieve for use in NovaFlex foam machinery manufactured by Hennecke Machinery. The sieve has a pore diameter of 85 microns, a porosity of 16%, and a diameter of 9 mm. |
|---|---|
| Test Filter B: | A 700-wire mesh screen manufactured by Cleveland Wire Cloth and Manufacturing. The filter has a mean pore size of 5 microns, a porosity of 60%, and a diameter of 22 mm. |

The following procedure was used in each of the examples unless otherwise noted:

A polymer polyol was charged to an agitated, heated feed vessel and allowed to flow under gravity to the inlet of a gear pump. The polymer polyol was discharged from the pump at a constant flow rate to an insulated filter housing containing a pleated depth filter. The polymer polyol was passed through the filter by means of a pressure gradient and then discharged into a filtrate collection vessel. The temperature of the polymer polyol was maintained in the filter housing and the pressure drop across the filter were measured versus time. The filtrate was periodically sampled and tested for the concentration of blinding solids. In the examples below, the terms "inlet concentration" and "outlet concentration" are as defined above.

Examples 1 and 2:

In Examples 1 and 2 shown in Table 1, Polymer Polyol A was filtered using Pleated Depth Filter A at 71°C over 20.2 hours. The pressure drop across the filter did not change over the course of the experiment, thereby indicating that the filter still had additional capacity for blinding particles and was not fully loaded.

In Example 1, Test Filter A was used to evaluate the performance of the Pleated Depth Filter A. The concentration of blinding particles in the filtrate was 0.20 ppm, corresponding to a removal efficiency of 94.2%. Therefore, at a particle size ratio of 84:1 and a test filter ratio of 1.2:1, the pleated depth filter selectively separated the blinding particles from the other particles in the dispersion, which resulted in a high removal efficiency and a long filter life.

In Example 2, Test Filter B was used to evaluate the performance of the Pleated Depth Filter A. The concentration of blinding particles in the filtrate was 12.2 ppm, corresponding to a removal efficiency of only 20.8%. Therefore, at a particle size ratio of 84:1 and a test filter size ratio of 4.0:1, the pleated depth filter had a poor separation efficiency and was not able to remove enough of the blinding particles.

TABLE 1

| Parameter | Example 1 | Example 2 |
|---|---|---|
| Initial pressure drop, bar | 0.07 | 0.07 |
| Final pressure drop, bar | 0.07 | 0.07 |
| Inlet concentration, ppm | 3.5 | 15.4 |
| Outlet concentration, ppm | 0.20 | 12.2 |
| Particle removal efficiency, % | 94.2 | 20.8 |
| Particle size ratio | 84:1 | 84:1 |
| Test filter ratio | 1.2:1 | 4.0:1 |

Example 3:

In Example 3 shown in Table 2, Polymer Polyol A was filtered using Pleated Depth Filter B at 70°C over 4.7 hours. The pressure drop across the filter increased significantly over the course of the experiment, thereby indicating that the filter was highly loaded and did not have much additional capacity for blinding particles. Test Filter A was used to evaluate the performance of the pleated depth filter B. The concentration of blinding particles in the filtrate was 0.07 ppm, which corresponded to a removal efficiency of 98%. Therefore, at a particle size ratio of 59:1 (compared to 84:1 in Example 1) and a test filter ratio of 0.82:1 (compared to 1.2:1 in Example 1), the separation efficiency of Pleated Depth Filter B was higher in Example 3 than in Example 1 because more particles were removed from the dispersion. This resulted, however, in a somewhat shorter pleated depth filter life.

TABLE 2

| Parameter | Example 3 |
|---|---|
| Initial pressure drop, bar | 0.26 |
| Final pressure drop, bar | 1.7 |
| Inlet concentration, ppm | 3.5 |
| Outlet concentration, ppm | 0.07 |
| Particle removal efficiency, % | 98.0 |
| Particle size ratio | 59:1 |
| Test filter ratio | 0.82:1 |

Example 4:

In Example 4, the results for which are set forth in Table 3, Polymer Polyol A was filtered using Pleated Depth Filter C at about 63°C over 16.9 hours. The pressure drop across the filter did not increase significantly over the course of the experiment, thereby indicating that filter still had additional capacity for blinding particles and was not fully loaded. Test Filter A was used to evaluated the performance of the Pleated Depth Filter C. The concentration of blinding particles in the filtrate was 0.16 ppm, which corresponded to a removal efficiency of 95.4%. The inlet pressure drop across the pleated depth filter was twice that for Example 1, which caused the filter to load more quickly and resulted in a shorter filter life in Example 4.

TABLE 3

| Parameter | Example 4 |
|---|---|
| initial pressure drop, bar | 0.14 |
| final pressure drop, bar | 0.17 |
| inlet concentration, ppm | 3.5 |
| outlet concentration, ppm | 0.16 |
| particle removal efficiency, % | 95.4 |
| particle size ratio | 84:1 |
| test filter ratio | 1.2:1 |

Example 5:

In Example 5, the results for which are set forth in Table 4, Polymer Polyol A was filtered using Pleated Depth Filter C at about 67°C over 2.6 hours. The pressure drop across the filter increased moderately over the course of the experiment, thereby indicating that the filter still had additional capacity for blinding particles but was partially loaded. Test Filter A was used to evaluated the performance of the Pleated Depth Filter C. The concentration of blinding particles in the filtrate was 0.32 ppm, which corresponded to a removal efficiency of 90.8%. The inlet pressure drop across the pleated depth filter was four times that for Example 1 and almost twice that for Example 4, which caused the filter to load more quickly in Example 5 and resulted in a shorter filter life and lower separation efficiency.

TABLE 4

| Parameter | Example 5 |
|---|---|
| initial pressure drop, bar | 0.26 |
| final pressure drop, bar | 0.40 |
| inlet concentration, ppm | 3.5 |
| outlet concentration, ppm | 0.32 |
| particle removal efficiency, % | 90.8 |

(continued)

| Parameter | Example 5 |
|---|---|
| particle size ratio | 84:1 |
| test filter ratio | 1.2:1 |

Example 6:

In Example 6, the results for which are set forth in Table 5, Polymer Polyol B was filtered using Pleated Depth Filter D at about 59°C over 0.7 hours. The pressure drop across the filter did not increase significantly over the course of the experiment, thereby indicating that the filter still had additional capacity for blinding particles and was not fully loaded. Test Filter A was used to evaluated the performance of the Pleated Depth Filter D. The concentration of blinding particles in the filtrate was 0.05 ppm, which corresponds to a removal efficiency of 97.3%. At a test filter ratio of 0.47:1, the concentration of blinding particles in the filtrate was much lower that that achieved in Examples 1 and 3, in which the test filter ratios were 1.2:1 and 0.82:1, respectively. Even at a particle size ratio of 39:1, the filter was not significantly loaded after almost one hour of operation.

TABLE 5

| Parameter | Example 6 |
|---|---|
| initial pressure drop, bar | 0.09 |
| final pressure drop, bar | 0.08 |
| inlet concentration, ppm | 1.8 |
| outlet concentration, ppm | 0.05 |
| particle removal efficiency, % | 97.3 |
| depth filter pore size/mean particle size | 39:1 |
| depth filter pore size/test filter pore size | 0.47:1 |

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

**Claims**

1. A polymer polyol having a solids content of about 10% by weight to about 60% by weight, a mean average particle size of at least 0.60 $\mu$, and containing a concentration of blinding particles $c_b$ in which

$$c_b \leq 10^6 \cdot \frac{\pi \rho_s N_{p0} d_p^3}{c_s m_0} \left[ 1 - \frac{\mu R_{m0}}{\rho A \Delta p} \left( \frac{dm}{dt} \right)_{final} \right]$$

wherein:

$c_b$ represents the concentration of blinding particles, measured in ppm;
$N_{p0}$ represents the number of pores in a clean test filter;
dp represents the pore diameter of a clean test filter, measured in m;
$R_{m0}$ represents the resistance of a clean test filter, measured in 1/m;
A represents the cross-sectional area of a test filter, measured in m$^2$;
$\rho$ represents the density of the polymer polyol, measured in kg/m$^3$;
$\mu$ represents the dynamic viscosity of the polymer polyol, measured in Pa·s;
$\rho_s$ represents the density of the solids in the polymer polyol, measured in kg/m$^3$;

$c_s$ represents the concentration of total solids in the polymer polyol, measured in wt. %;
$\Delta p$ represents the constant pressure drop applied across the test filter, measured in Pa;
$m_0$ represents the total mass of filtrate collected, measured in kg;

$$\left(\frac{dm}{dt}\right)_{final}$$

represents the slope of the mass versus time curve at the end of the pressure filtration test, measured in kg/s,

wherein said polymer polyol comprises the free-radical polymerization product of (a) at least one base polyol, (b) at least one preformed stabilizer and (c) at least one ethylenically unsaturated monomer, in the presence of (d) at least one free-radical polymerization initiator.

2. The polymer polyol of Claim 1, in which said free-radical polymerization additionally occurs in the presence of (e) a polymer control agent.

3. The polymer polyol of Claim 1, in which the concentration of blinding particles in the polymer polyol is less than about 0.55 ppm.

4. The polymer polyol of Claim 1, in which the concentration of blinding particles in the polymer polyol is less than about 0.2 ppm.

5. The polymer polyol of Claim 1, in which the concentration of blinding particles present in the polymer polyol is determined by filtering said polymer polyol through a pleated depth filter, wherein

   a) the initial pressure drop across said pleated depth filter is less than about 1.0 bar;
   b) the final pressure drop across said pleated depth filter at the end of the filtration cycle is less than about 4 bar;
   c) the ratio of the absolute pore size of said pleated depth filter to the mean particle size of the of the solids in the polymer polyol is greater than about 30:1;
   and
   d) the ratio of the absolute pore size of said pleated depth filter to the pore size of the test filter is between about 0.4:1 and about 4:1.

6. The polymer polyol of Claim 5 wherein

   (a) the initial pressure drop across said pleated depth filter is less than about 0.5 bar.

7. The polymer polyol of Claim 1, wherein the solids content ranges from greater than or equal to 20% by weight to less than or equal to 60% by weight.

8. A process for the preparation of polymer polyols having a solids content of greater than or equal to 10 wt% up to about 60 wt%, a mean average particle size of at least 0.60 $\mu$, and containing a concentration of blinding particles $c_b$ in which

$$c_b \leq 10^6 \cdot \frac{\pi \rho_s N_{p0} d_p^3}{c_s m_0}\left[1 - \frac{\mu R_{m0}}{\rho A \Delta p}\left(\frac{dm}{dt}\right)_{final}\right]$$

wherein:

   $c_b$ represents the concentration of blinding particles, measured in ppm;
   $N_{p0}$ represents the number of pores in a clean test filter;
   dp represents the pore diameter of a clean test filter, measured in m;

$R_{m0}$ represents the resistance of a clean test filter, measured in 1/m;

A represents the cross-sectional area of a test filter, measured in $m^2$;

$\rho$ represents the density of the polymer polyol, measured in $kg/m^3$;

$\mu$ represents the dynamic viscosity of the polymer polyol, measured in Pa·s;

$\rho_s$ represents the density of the solids in the polymer polyol, measured in $kg/m^3$;

$c_s$ represents the concentration of total solids in the polymer polyol, measured in wt. %;

$\Delta p$ represents the constant pressure drop applied across the test filter, measured in Pa;

$m_0$ represents the total mass of filtrate collected, measured in kg; and

$$\left(\frac{dm}{dt}\right)_{final}$$

represents the slope of the mass versus time curve at the end of the pressure filtration test, measured in kg/s.

comprising

(1) continuously free-radically polymerizing (a) at least one base polyol, (b) at least one preformed stabilizers, and (c) at least one ethylenically unsaturated monomers, in the presence of (d) at least one free-radical polymerization initiator;

(2) continuously filtering the polymer polyol through a suitable depth filter, and

(3) collecting the filtrate.

9. The process of Claim 8, in which said free-radical polymerization additionally occurs in the presence of (e) a polymer control agent.

10. The process of Claim 8, in which the concentration of blinding particles in the polymer polyol is less than about 0.55 ppm of blinding particles.

11. The process of Claim 8, in which the concentration of blinding particles in the polymer polyol is less than about 0.2 ppm.

12. The process of Claim 8, in which said filter in step (2) is a pleated depth filter, and

a) the initial pressure drop across said pleated depth filter is less than about 1.0 bar;

b) the final pressure drop across said pleated depth filter at the end of the filtration cycle is less than about 4 bar;

c) the ratio of the absolute pore size of said pleated depth filter to the mean particle size of the of the solids in the polymer polyol is greater than about 30:1; and

d) the ratio of the absolute pore size of said pleated depth filter to the pore size of the test filter is between about 0.4:1 and about 4:1.

13. The process of Claim 12, wherein:

a) the initial pressure drop across said pleated depth filter is less than about 0.5 bar.

14. The process of Claim 8, wherein the solids content of the polymer polyol ranges from greater than or equal to 20% by weight to less than or equal to 60% by weight.

**Europäisches Patentamt**
**European Patent Office**
**Office européen des brevets**

## EUROPEAN SEARCH REPORT

Application Number

EP 08 02 1340

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 02/49740 A (BAYER AG [DE]; BRAUN ARNE [DE]; BROCKELT MICHAEL [DE]; DIETRICH MANFRE) 27 June 2002 (2002-06-27) <br> * page 5, line 1 - page 6, line 19 * <br> * example 1 * <br> * claim 1 * <br> ----- | 1-12 | INV. <br> C08G18/63 <br> B01D37/04 <br> B01D61/14 |
| X | US 5 814 699 A (KRATZ MARK R [DE] ET AL) 29 September 1998 (1998-09-29) <br> * column 9, line 55 - column 12, line 14 * <br> * table II * <br> * claims 1,16 * <br> ----- | 1-12 | |
| X | US 2003/220410 A1 (HEINIS BOB [NL] ET AL) 27 November 2003 (2003-11-27) <br> * paragraphs [0021] - [0023]; examples 1-3 * <br> * table 2 * <br> * claim 1 * <br> ----- | 1-12 | |
| X | US 2005/222361 A1 (ZASCHKE BERND [DE] ET AL) 6 October 2005 (2005-10-06) <br> * paragraphs [0028] - [0033], [0072], [0073] * <br> * paragraph [0081] * <br> * paragraph [0161] * <br> * table 4 * <br> * claims 1,2,8 * <br> ----- | 1-12 | **TECHNICAL FIELDS SEARCHED (IPC)** <br><br> B01D <br> C08G |

The present search report has been drawn up for all claims

| Place of search | Date of completion of the search | Examiner |
|---|---|---|
| Munich | 16 April 2009 | Heidenhain, Frank |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 08 02 1340

This annex lists the patent family members relating to the patent documents cited in the above-mentioned European search report.
The members are as contained in the European Patent Office EDP file on
The European Patent Office is in no way liable for these particulars which are merely given for the purpose of information.

16-04-2009

| Patent document cited in search report | | Publication date | Patent family member(s) | | Publication date |
|---|---|---|---|---|---|
| WO 0249740 | A | 27-06-2002 | AU | 3455702 A | 01-07-2002 |
| | | | DE | 10063484 A1 | 04-07-2002 |
| | | | US | 2002077452 A1 | 20-06-2002 |
| US 5814699 | A | 29-09-1998 | BR | 9605032 A | 30-06-1998 |
| | | | CA | 2187125 A1 | 11-04-1997 |
| | | | CN | 1160061 A | 24-09-1997 |
| | | | DE | 69518423 D1 | 21-09-2000 |
| | | | DE | 69518423 T2 | 14-12-2000 |
| | | | EP | 0768324 A1 | 16-04-1997 |
| | | | ES | 2148397 T3 | 16-10-2000 |
| | | | JP | 9124750 A | 13-05-1997 |
| US 2003220410 | A1 | 27-11-2003 | AU | 2003237685 A1 | 02-12-2003 |
| | | | CN | 1656139 A | 17-08-2005 |
| | | | WO | 03097712 A1 | 27-11-2003 |
| | | | JP | 2005526157 T | 02-09-2005 |
| US 2005222361 | A1 | 06-10-2005 | AT | 335030 T | 15-08-2006 |
| | | | AU | 2003215659 A1 | 29-09-2003 |
| | | | BR | 0308127 A | 11-01-2005 |
| | | | CA | 2481697 A1 | 25-09-2003 |
| | | | CN | 1656136 A | 17-08-2005 |
| | | | WO | 03078496 A1 | 25-09-2003 |
| | | | EP | 1487895 A1 | 22-12-2004 |
| | | | ES | 2268389 T3 | 16-03-2007 |
| | | | JP | 2005527656 T | 15-09-2005 |
| | | | MX | PA04008161 A | 17-05-2005 |
| | | | RU | 2316567 C2 | 10-02-2008 |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5279731 A
- JP 06199929 A
- WO 9324211 A
- US 20020077452 A1
- US 6797185 B
- US 5196476 A
- US 3875258 A
- US 3931092 A
- US 3950317 A
- US 3953393 A
- US 4014846 A
- US 4093573 A
- US 4148840 A
- US 4242249 A
- US 4372005 A
- US 4334049 A
- US 4454255 A
- US 4458038 A
- US 4689354 A
- US 4690956 A
- US 4745153 A
- US RE29014 E
- US 4305861 A
- US 4954561 A
- US 4997857 A
- US 5093412 A
- US 5254667 A
- US 5268418 A
- US 5494957 A
- US 5554662 A
- US 5594066 A
- US 5814699 A
- US 5854358 A
- US 5854386 A
- US 5990185 A
- US 5990232 A
- US 6013731 A
- US 6172164 B
- US 6455603 B
- US 7160975 B
- US 7179882 B
- US RE33291 E
- US 4524157 A
- US 4539340 A
- US RE28715 E
- US RE29118 E